# EUROPÄISCHE PATENTSCHRIFT

(11) **EP 1 563 263 B1**
(45) Veröffentlichungstag und Bekanntmachung des Hinweises auf die Patenterteilung: **28.06.2006**
(21) Anmeldenummer: 03767436.3
(22) Anmeldetag: 20.11.2003
(51) Int. Cl.: G01F 25/00, G01F 23/36, H01H 35/18

(54) **VORRICHTUNG ZUM PRÜFEN EINES SCHWIMMERSCHALTERS**
DEVICE FOR CHECKING A FLOATING SWITCH
DISPOSITIF POUR VERIFIER UN INTERRUPTEUR A FLOTTEUR

(30) Priorität: 20.11.2002 DE 20217938 U
(43) Veröffentlichungstag der Anmeldung: 17.08.2005
(73) Patentinhaber: Schulz, Hans-Joachim, 18069 Rostock (DE); Selent, Horst, 18069 Rostock (DE)
(72) Erfinder: Schulz, Hans-Joachim, 18069 Rostock (DE); Selent, Horst, 18069 Rostock (DE)
(74) Vertreter: Maisch, Thomas
(86) Internationale Anmeldenummer: PCT/DE2003/003836
(87) Internationale Veröffentlichungsnummer: WO 2004/046664

(56) Entgegenhaltungen:
- GB-A- 528 564
- GB-A- 1 070 208
- GB-A- 1 407 537
- US-A- 4 454 747

## Beschreibung

Die Erfindung betrifft eine Vorrichtung zur Überwachung und Regelung von Flüssigkeitsfüllständen mit einem eine Signalübertragungseinrichtung enthaltenden Gehäuse, einem dem Gehäuse zugeordneten Gehäuseflansch zum Anflanschen an einen Durchgang, insbesondere an einen Durchgang in einer Behälterwand, einem sich durch den Gehäuseflansch hindurch erstreckenden schwenkbaren Betätigungsorgan mit einem endseitig angeordneten Schwimmer und einem auf das Betätigungsorgan wirkenden Auslöser.

Vorrichtungen zur Überwachung und Regelung von Flüssigkeitsfüllständen finden in vielfältigen Ausgestaltungen in der Schifffahrt und in der Industrie Anwendung. Diese Vorrichtungen erfassen Flüssigkeitsfüllstände in offenen Behältern, in Tanks, etc. und liefern das Flüssigkeitsniveau betreffende Informationen. Darüber hinaus können diese Vorrichtungen, gegebenenfalls unter Ansteuern von nachgeordneten Einrichtungen, Flüssigkeitsfüllstände regeln. Insbesondere werden diese Vorrichtungen verwendet, um Flüssigkeitsfüllstände innerhalb eines Schiffes zu überwachen und Lecks frühzeitig zu erkennen.

Einige der bekannten Vorrichtungen arbeiten nach dem Prinzip der magnetischen Übertragung von das Flüssigkeitsniveau betreffenden Informationen auf einen mechanischen Schaltkontakt. Über einen elektrischen Ausgang, welcher Mikroschalter umfasst, können optische und akustische Signale erzeugt werden. Diese Signale werden zur weiteren Verarbeitung in Überwachungsprozessen verwendet. Hierdurch lassen sich Steuerbefehle für Pumpen, Relais und Magnetventile erzeugen.

Nach den Bestimmungen der internationalen Schifffahrtsbehörden muss jede Vorrichtung zur Überwachung von Flüssigkeitsfüllständen in festgelegten zeitlichen Abständen einer mechanischen Kontrolle zur Überprüfung der Schaltfunktionen der Betätigungsorgane unterzogen werden.

Die aus der Praxis bekannten Vorrichtungen umfassen ein Gehäuse, dem ein Flansch zugeordnet ist, der dem Anflanschen an einen Gegenflansch dient. Der Gegenflansch ist dabei an einer Behälterwand angeordnet, in der die zu überwachende Flüssigkeit enthalten ist. Bei diesen Vorrichtungen wird ein Auslöser zur Kontrolle der Schaltfunktionen einem gesonderten Prüfflansch zugeordnet, der zwischen dem Gehäuseflansch und dem mit der Behälterwand verschweißten Gegenflansch angeordnet ist.

Der Einbau eines solchen Prüfflansches erfordert aufwendige Montageschritte, um ein gebrauchstaugliches Kontrollsystem zu installieren. Hierbei ist insbesondere problematisch, dass die Installation des Prüfflansches äußerst sorgfältig durchgeführt werden muss, um Leckagen im Kontrollsystem zu vermeiden. Problematisch ist überdies, dass die Fertigung eines Prüfflansches unter Einhaltung geringster Toleranzwerte erfolgen muss, um einen Prüfflansch bereit zu stellen, der in seinen Dimensionen mit den mit ihm verbundenen Flanschen korrespondiert. Schließlich geht mit der Fertigung von Prüfflanschen ein erheblicher Materialaufwand einher, da schon geringe Abweichungen von den Toleranzwerten zur Produktion von Ausschussware führt, die nicht für die Installation in den bisher bekannten Kontrollsystemen geeignet ist.

Der Erfindung liegt daher die Aufgabe zugrunde, eine Vorrichtung zur Überwachung und Regelung von Flüssigkeitsfüllständen der eingangs genannten Art derart auszugestalten und weiterzubilden, dass ein zuverlässiges und problemlos arbeitendes und leicht installierbares Kontrollsystem realisiert ist.

Die erfindungsgemäße Vorrichtung zur Überwachung von Flüssigkeitsfüllständen löst die voranstehende Aufgabe durch die Merkmale des Patentanspruchs 1. Danach ist die gattungsbildende Vorrichtung zur Überwachung von Flüssigkeitsfüllständen so ausgebildet, dass sich der Auslöser mit einem Auslöseorgan durch den Gehäuseflansch hindurch zum Betätigungsorgan erstreckt.

Erfindungsgemäß ist in einem ersten Schritt erkannt worden, dass die gattungsbildenden Vorrichtungen im Hinblick auf einen praxisgerechten Einsatz erhebliche Nachteile aufweisen. In einem zweiten Schritt ist erkannt worden, dass die Probleme damit einhergehen, dass bei den gattungsbildenden Kontrollsystemen mehrere Einzelteile zu montieren sind, die Quellen für Leckagen darstellen. Schließlich ist erkannt worden, dass eine Kombination eines Prüfflansches mit einem Gehäuseflansch die aufgezeigten Probleme auf überraschend einfache Weise löst. Durch Vorkehrung eines einzelnen Bauteils, das sowohl als Gehäuse als auch als Prüfflansch dient, wird die Gefahr von Leckagebildungen wirksam vermindert. Darüber hinaus erlaubt die Vorkehrung eines Auslösers im Gehäuseflansch eine Verringerung des Materialaufwands und die Ersparnis von Fertigungsschritten, da eine fertigungstechnische Abstimmung des Prüfflanschs auf den Gehäuseflansch nicht notwendig ist.

Der Auslöser könnte eine vom Flüssigkeitsfüllstand unabhängige Schaltbewegung des Betätigungsorgans bewirken. Durch diese konkrete Ausgestaltung ist gewährleistet, dass die normalerweise durch die Flüssigkeit bewirkte Bewegung des Betätigungsorgans durch den Auslöser simuliert wird. Insoweit ist sichergestellt, dass eine möglichst realistische Prüfung der Schaltfunktionen der Vorrichtung möglich ist.

Der Auslöser könnte manuell betätigbar sein. Diese Ausgestaltung erlaubt die Realisierung eines besonders robusten und zuverlässig arbeitenden Auslösers, da eine manuelle Betätigung im Gegensatz zu elektrischen oder magnetischen Betätigungen aufgrund der Verwendung ausschließlich mechanischer Mittel wenig störanfällig ist. Ebenso könnte der Auslöser elektromechanisch, vorzugsweise kontaktlos über eine Fernbedienung, betätigbar sein, wodurch sich ein unmittelbarer Zugriff auf den Auslöser bzw. das Betätigungsorgan erübrigt.

Das Auslöseorgan könnte mittelbar oder unmittelbar auf das Betätigungsorgan wirken und eine Schwenkbewegung des Schwimmers bewirken. Durch diese konkrete Ausgestaltung ist gewährleistet, dass die Bewegung des Betätigungsorgans zusammen mit der Bewegung des Schwimmers gekoppelt überprüfbar ist. Insoweit ist ermöglicht, dass das die Bewegung des Betätigungsorgans im Betriebszustand bewirkende Mittel, nämlich der Schwimmer, ebenfalls im Hinblick auf sein Bewegungsverhalten getestet werden kann.

Das Auslöseorgan des Auslösers könnte eine von der Schwimmerbewegung ganz oder teilweise entkoppelte Schaltbewegung des Betätigungsorgans bewirken. Hierdurch kann die Funktion des Betätigungsorgans ohne besonderen Kraftaufwand überprüft werden, da ein eventuell auf der Flüssigkeitsoberfläche durch Adhäsionskräfte anhaftender Schwimmer nicht bewegt bzw. von der Flüssigkeitsoberfläche abgehoben werden muss.

Im Hinblick auf eine besonders kompakte und flüssigkeitsdichte Ausgestaltung der Vorrichtung ist im Gehäuseflansch eine Bohrung ausgebildet. Entsprechend wird der Auslöser von einer Seite her in der Bohrung positioniert. Aufgrund der Einteiligkeit ist eine solche Ausgestaltung ganz besonders flüssigkeitsdicht. Verschmutzungen können nicht eindringen.

Grundsätzlich ist es denkbar, dass sich die Bohrung im Wesentlichen sich bis zur Mitte des Gehäuseflanschs in diesen hinein erstreckt. Dies reicht aus, um den Auslöser von einer Seite her in den Gehäuseflansch einzubringen, nämlich zur unmittelbaren Kontaktierung des Betätigungsorgans.

Insbesondere im Hinblick auf eine einfache Fertigung ist es von Vorteil, wenn sich die Bohrung durch den gesamten Gehäuseflansch hindurch im Sinne eines Durchgangs mit zwei offenen Enden erstreckt. Im Rahmen einer solchen Ausgestaltung ist wahlweise eines der offenen Enden mit einem Blindstopfen, einer Schraube oder dgl. verschlossen, so dass der Durchgang im Sinne einer einseitig angelegten Bohrung verwendbar ist, nämlich dahingehend, dass der Auslöser von einer Seite her in die Bohrung eingesteckt ist. An dieser Stelle sei angemerkt, dass unter Zugrundelegung der voranstehenden Ausführungen ein beliebiger Austausch des Auslösers, insbesondere auch vor Ort, möglich ist.

Aufgrund der durchgehenden Bohrung ist es möglich, dass der Auslöser wahlweise zur Oberwertmessung oder zur Unterwertmessung des Schwimmers von der einen Seite oder von der anderen Seite in die in dem Gehäuseflansch ausgebildete Bohrung eingesetzt werden kann. So lässt sich eine definierte obere Position des Schwimmers und/oder eine definierte untere Position des Schwimmers simulieren, wodurch ein Signal ausgelöst wird.

Wie bereits zuvor erwähnt, bietet sich zum Einbringen und zur Positionierung des Auslösers eine zylindrische Bohrung ganz besonders an, nämlich aufgrund der einfachen Fertigung. Diese Bohrung sollte sich vorzugsweise mittig durch den Gehäuseflansch hindurch - dort bis zur Mitte oder insgesamt durch den Gehäuseflansch hindurch - erstrecken. Dies hat den Vorteil, dass das sich durch die Mitte des Gehäuseflanschs erstreckende Auslöseorgan bzw. der Auslöser von genügend Gehäuseflanschmaterial umgeben ist, um dessen optimalen Schutz zu gewährleisten. Insbesondere kann Korrosion, welche sich langsam durch das Gehäuseflanschmaterial durchfrisst, einem mittig angeordneten Auslöseorgan erst nach längerer Zeit Schaden zufügen.

Der Auslöser könnte zumindest bereichsweise ein Außengewinde umfassen, welches mit einem Innengewinde der Bohrung korrespondiert. Die Vorkehrung von Gewinden erlaubt eine besonders präzise Positionierung des Auslösers in der Bohrung, wodurch Seitwärtsbewegungen des Auslösers nahezu ausgeschlossen werden. Insoweit ist eine besonders spielfreie Lagerung des Auslösers und damit des Auslöseorgans in der Bohrung gewährleistet. Durch eine besondere Ausgestaltung der Gewindegänge, kann überdies eine Dichtigkeit der Vorrichtung erzielt werden, da die Gewindegänge gegeneinander abdichten.

Die Bohrung könnte in etwa orthogonal zur Schwenkachse des Schwimmers orientiert sein. Die orthogonale Orientierung der Bohrung erlaubt eine orthogonale Orientierung des Auslöseorgans zur Schwenkachse des Schwimmers. Hierdurch ist eine besonders günstige Hebelwirkung erzielbar, welche erlaubt, das Auslöseorgan mit geringstem Kraftaufwand zu betätigen und dabei eine Schwenkbewegung sowohl des Betätigungsorgans, als auch des ihm zugeordneten Schwimmers zu bewirken.

Der Gehäuseflansch könnte im Bereich der Bohrung verdickt ausgebildet sein. Hierdurch ist gewährleistet, dass die Bohrung groß genug gewählt werden kann, um sie mit Gewinde zu versehen und ein hinreichend dickes und stabiles Auslöseorgan einzuführen. Darüber hinaus ist eine Verdickung dahingehend vorteilhaft, dass der Gehäuseflansch gegen Verdrillungen oder Verbiegungen besonders stabil ist.

Der Gehäuseflansch könnte quadratisch oder rechteckig mit abgerundeten Ecken ausgebildet sein. Die Vorkehrung von abgerundeten Ecken ist dahingehend vorteilhaft, dass bei der Montage eine eventuelle Verletzungsgefahr der montierenden Person weitgehend ausgeschlossen ist. Eine quadratische oder rechteckige Ausbildung ist von Vorteil, da der Gehäuseflansch bei einer solchen Ausbildung den internationalen Normen gerecht werden kann. Die internationalen Normen stellen auf Maße von 92 x 92 mm sowie einen Lochkreis von 92 mm ab.

Das Anflanschen an einen Gegenflansch, der eventuell Stehbolzen aufweisen kann, könnte dadurch erleichtert werden, dass der Gehäuseflansch in den Ecken Durchgänge aufweist, welche die Stehbolzen aufnehmen. Durch eine solche Ausgestaltung des Gehäuseflansches ist eine schnelle und zuverlässige Montage möglich.

Der Gehäuseflansch könnte Mittel zur schwenkbaren Aufnahme des Schwimmers aufweisen. Die Mittel könnten als zweiarmige Gabel ausgebildet sein, welche die Schwenkachse für den Schwimmer mittelbar oder unmittelbar tragen. Eine solche Ausgestaltung ist im Hinblick auf eine einfache Fertigung besonders vorteilhaft, da die Arme der Gabel am Gehäuseflansch durch Schweißen festlegbar sind oder als integrale Bestandteile des Gehäuseflanschs ausgeführt sein können. Darüber hinaus stellt eine solche Gabel ein stabiles Mittel zur Aufnahme des Schwimmers dar. Von Vorteil ist insbesondere, dass die Arme der Gabel so angeordnet sein können, dass ein genügend großer Zwischenraum für die Positionierung des Betätigungsorgans gegeben ist. Das Betätigungsorgan kann dabei mit dem Schwimmer direkt verbunden sein, mit diesem einstückig ausgebildet sein oder über Zwischenelemente mit dem Schwimmer wirkverbunden sein.

Nun ist es grundsätzlich möglich, dass zum Inneren des Behälters hin der in den Behälter - durch die Behälterwand hindurch - führende Durchgang zum Schwimmer hin offen ist und von der Außenseite - schraub- oder schweißtechnisch - gegenüber der hier in Rede stehenden Vorrichtung abgedichtet ist. Dies hat den Nachteil, dass nicht nur der Schwimmer, sondern auch die den Schwimmer nach außerhalb verbindende Mechanik weitgehend ungeschützt ist. Insoweit ist es von Vorteil, wenn ein die Mittel zur schwenkbaren Aufnahme des Schwimmers zumindest teilweise umgebendes Schutzgehäuse vorgesehen ist, welches diese Mittel bzw. die dazu dienende zweiarmige Gabel nebst Schwenkgelenk umgeben und somit schützen. Im Konkreten könnte das Schutzgehäuse als sich mit den Mitteln zur schwenkbaren Aufnahme des Schwimmers vom Gehäuseflansch zum Schwimmer durch den Durchgang hindurch erstreckende Hülle ausgeführt sein, so dass die Einheit vom Gehäuseflansch bis hin zum Schwimmer weitgehend geschützt oder gar abgedichtet ausgeführt ist. Ebenso ist es denkbar, dass das Schutzgehäuse als sich mit den Mitteln zur schwenkbaren Aufnahme des Schwimmers von der Wandung des Durchgangs bzw. von der Behälterwand zum Schwimmer erstreckende Hülle ausgeführt ist. In einem solchen Fall wäre das Schutzgehäuse auf der Innenseite des Behälters an der dortigen Wand vorgesehen und wären die Mittel zur schwenkbaren Aufnahme des Schwimmers ebenfalls geschützt oder gar abgedichtet. Beide Varianten sind realisierbar.

Im Lichte der voranstehenden Ausführungen und unter Zugrundelegung der dort beschriebenen Konstruktion könnte das Schutzgehäuse am Gehäuseflansch oder an der Wandung des Durchgangs bzw. an der Behälterwand festgelegt sein. Geht man davon aus, dass die hier beanspruchte Vorrichtung als quasi monolithisches Bauteil gehandhabt werden soll, bietet sich die Festlegung des Schutzgehäuses am Gehäuseflansch an, so dass die gesamte Einheit durch den Durchgang hindurch in den Behälter ragt und von außen am Behälter angeflanscht wird.

Das Schutzgehäuse könnte starr ausgeführt sein, wobei am vorderen Ende eine gelenkige Verbindung zum Schwimmer hin realisiert sein muss. Darüber hinaus ist es erforderlich, dass sich die Lage des Schwimmers entsprechend dem Füllstand verändert, so dass eine Schwenkbewegung der Mittel bzw. der Gabel realisierbar ist. Insoweit bietet sich am freien Ende des Schutzgehäuses ein Schlitz an, durch den hindurch der Schwimmer mit den Mitteln bzw. mit der Gabel und dem dortigen Gelenk verbunden ist.

Alternativ könnte das Schutzgehäuse elastisch ausgeführt sein, wobei es sogar denkbar ist, das Schutzgehäuse im Sinne eines Balgs auszubilden. Im Rahmen einer solchen Ausgestaltung könnte am Ende des Schutzgehäuses eine Anlenkung des Schwimmers möglich sein, wobei das aus dem Schutzgehäuse herausragende Anschlusssteil zum Gehäuse hin abgedichtet sein kann. Das Eindringen von Flüssigkeit wäre dann zumindest weitgehend oder gänzlich ausgeschlossen. Eine solche Ausführung ist jedenfalls dann möglich, wenn das Schutzgehäuse elastisch oder im Sinne eines Balgs mit hinreichender Stabilität ausgeführt ist.

Wie bereits zuvor erwähnt, schließt sich endseitig an das Gehäuse der Schwimmer an, wobei es sich dabei um beliebige Schwimmer entsprechend der jeweiligen Anwendung handeln kann.

Des Weiteren ist zu erwähnen, dass das Gehäuse auf der dem Gehäuseflansch abgewandten Seite abgeschlossen ist, nämlich mit einem besonderen Deckel. Somit umfasst das Gehäuse endseitig einerseits einen Deckel und andererseits den Gehäuseflansch, wobei es sich dabei um eine bauliche Einheit handelt. Auch der Gehäusedeckel lässt sich fest mit dem sonstigen Gehäuse verbinden, nämlich über den Bauteilen zugeordnete oder integrale Flansche, so dass eine feste Verschraubung möglich ist.

In materialmäßiger Hinsicht ist es von Vorteil, wenn das Gehäuse aus Rotguss RG 5 oder aus Rotguss RG 10 besteht. Dies bezieht sich sowohl auf das Gehäuse selbst als auch auf den Gehäuseflansch nebst Gehäusedeckel, wobei dort auch andere Materialien Anwendung finden können. Jedenfalls bewirkt eine solche Ausgestaltung eine hohe Korrosionsresistenz der Vorrichtung und erlaubt einen besonders langen zuverlässigen Arbeitseinsatz der Vorrichtung auch in Schadatmosphäre.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung zweier Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Ausführungsbeispiel einer erfindungsgemäßen Vorrichtung zur Überwachung von Flüssigkeitsfüllständen, die an einer Behälterwand angeflanscht ist,

- Fig. 2: den Gegenstand aus Fig. 1 in einer perspektivischen Stirnansicht und im abgeflanschten Zustand ohne Schwimmer, und
- Fig. 3: in einer schematischen Ansicht ein weiteres Ausführungsbeispiel einer erfindungsgemäßen Vorrichtung, wobei dort in Ergänzung zu dem Ausführungsbeispiel aus den Fig. 1 und Fig. 2 ein besonderes Schutzgehäuse vorgesehen ist.

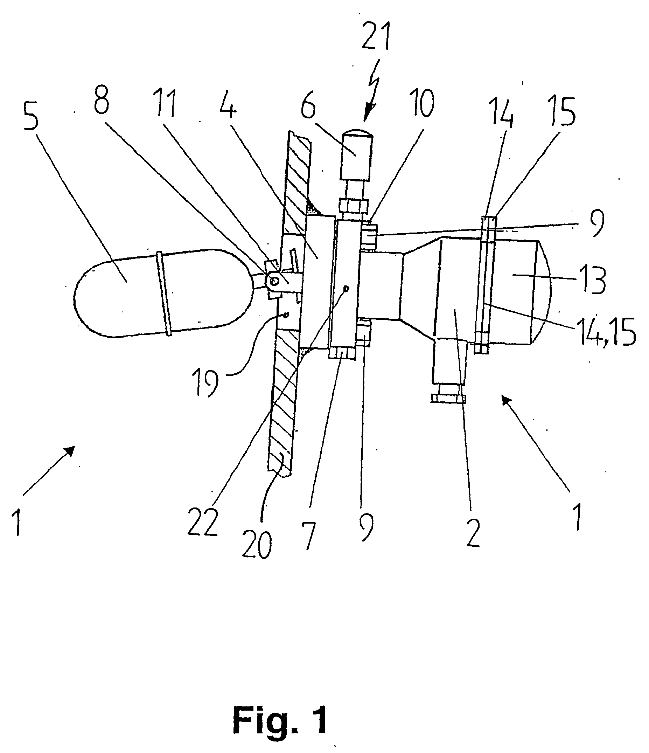

Fig. 1 zeigt eine Vorrichtung 1 zur Überwachung von Flüssigkeitsfüllständen mit einem eine Signalübertragungseinrichtung enthaltenden Gehäuse 2. Dem Gehäuse 2 ist ein Gehäuseflansch 3 zugeordnet, der dem Anflanschen an einen Durchgang in einer Behälterwand dient. Dabei ist der Gehäuseflansch 3 an einen Gegenflansch 4 an der Behälterwand angeflanscht. Durch den Gehäuseflansch 3 erstreckt sich ein Betätigungsorgan mit einem endseitig angeordneten Schwimmer 5 hindurch.

Die Vorrichtung 1 umfasst außerdem einen Auslöser 6 zum Prüfen der Schaltfunktion des Betätigungsorgans, welcher im Gehäuseflansch 3 positioniert ist. Der Auslöser 6 umfasst ein Auslöseorgan zur manuellen Betätigung des Betätigungsorgans. Das Auslöseorgan wirkt auf das Betätigungsorgan. Der Auslöser 6 befindet sich in einer Bohrung 16, welche an der dem Auslöser 6 abgewandten Ende durch einen Blindstopfen 7 verschlossen ist. Die Bohrung 16 ist orthogonal zur horizontalen Schwenkachse 8 des Schwimmers 5 orientiert. Der Gehäuseflansch 3 weist einen verdickten Bereich 10 auf, der den Auslöser 6 aufnimmt. Dieser Bereich 10 erstreckt sich von der Außenkante des Gehäuseflansches 3 radial nach innen und geht in die Wand des Gehäuseunterteils 12 über.

Das Gehäuse 2 ist über den Gehäuseflansch 3 an dem Gegenflansch 4 festgelegt. Der Gegenflansch 4 ist an der Behälterwand angeschweißt und mit Stehbolzen ausgestattet, auf die der Gehäuseflansch 3 gesteckt und mittels der Muttern 9 fest verschraubt wird. Zwischen Gegenflansch 4 und Gehäuseflansch 3 ist eine Dichtung eingelegt.

Der Gehäuseflansch 3 umfasst eine Gabel 11, welche sich in das Innere des Behälters erstreckt. Die Gabel 11 trägt die Schwenkachse 8 des Schwimmers 5. Der Gehäuseflansch 3 ist einem Unterteil 12 des Gehäuses 2 zugeordnet. Das Unterteil 12 des Gehäuses 2 ist mit einem Gehäusedeckel 13 über Flansche 14 und 15 verbunden.

Das Gehäuse 2 dient der geschützten Aufnahme einer nicht näher beschriebenen Signalübertragungseinrichtung. Die Abnahme des Gehäusedeckels 13 ermöglicht den Zugang zu der Signalübertragungseinrichtung im Unterteil 12 des Gehäuses 2. Zwischen Unterteil 12 des Gehäuses 2 und Gehäusedeckel 13 sorgt eine Dichtung für die notwendige flüssigkeitsdichte Verbindung.

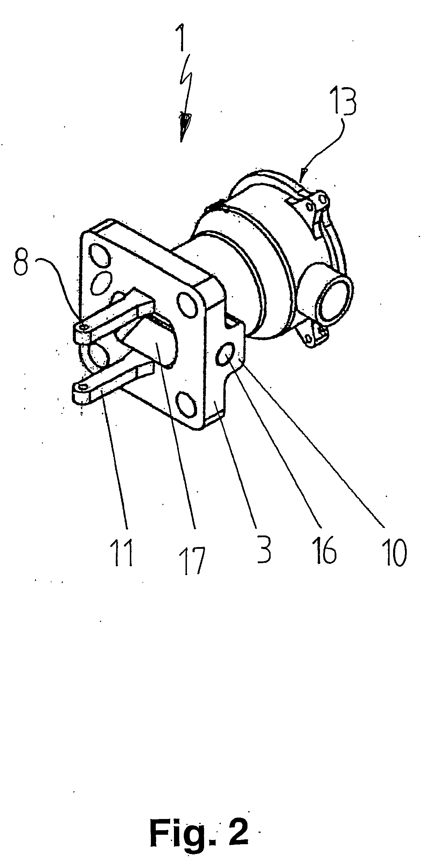

Fig. 2 zeigt den Gehäuseflansch 3, die Bohrung 16 zur Aufnahme des Auslösers 6 sowie den verdickten Bereich 10. Dem Gehäuseflansch 3 ist die Gabel 11 zugeordnet, welche die Schwenkachse 8 des Schwimmers 5 aufnimmt. Die Bohrung 16 erstreckt sich zum inneren Bereich 17 des Gehäuseflansches 3. Die Bohrung 16 dient der Aufnahme eines mit einem entsprechenden Außengewinde versehenen Auslösers 6, mit dem durch ein Auslöseorgan eine mechanische Kontrolle der Schaltfunktion des Betätigungsorgans durchgeführt werden kann. Das Auslöseorgan wird bis in den Verbindungsbereich des Schwimmers 5 mit der Signalübertragungseinrichtung geführt, um dort die Schaltfunktion des Betätigungsorgans zu bewirken.

In Bezug auf die Fig. 1 und 2 sei angemerkt, dass die Bohrung 16 insgesamt durch den Gehäuseflansch 3 hindurch verläuft. Entsprechend lässt sich der Auslöser bzw. das Betätigungsorgan 6 wahlweise von der einen oder anderen Seite her in die Bohrung 16 einbringen, so dass - wahlweise - eine Oberwertmessung oder eine Unterwertmessung bzw. eine der Oberwertmessung und/oder Unterwertmessung entsprechende Auslösung möglich ist. Jedenfalls wird die Bohrung 16 von einer Seite her geschlossen, wobei ein Wechsel und ein Austauschen des Auslösers möglich sind.

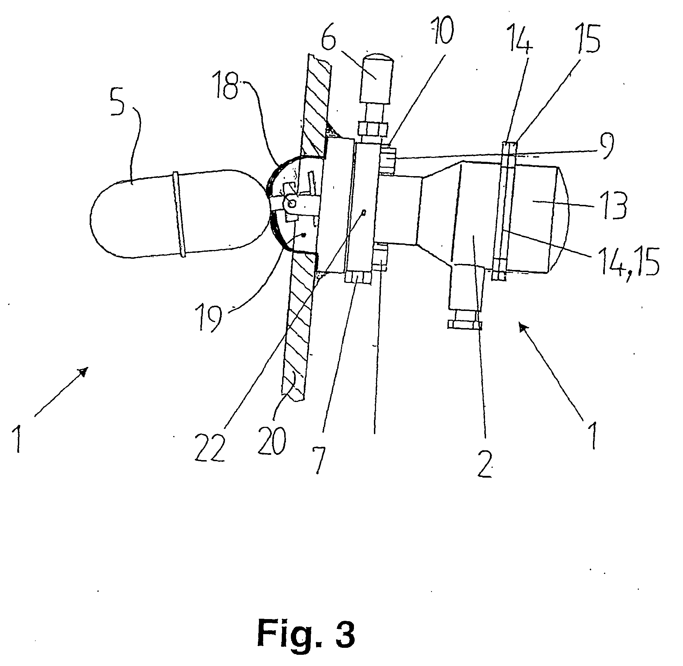

Fig. 3 zeigt ein weiteres Ausführungsbeispiel einer erfindungsgemäßen Vorrichtung, bei der ein besonderes Schutzgehäuse 18 vorgesehen ist. Dieses Schutzgehäuse 18 ist als sich mit den Mitteln zur schwenkbaren Aufnahme des Schwimmers 5 vom Gehäuseflansch 3 zum Schwimmer 5 durch den Durchgang 19 hindurch erstreckende Hülle ausgeführt. Ebenso könnte das Schutzgehäuse 18 auf der Behälterinnenseite an die Innenwandung des Behälters angeschraubt bzw. dort festgelegt sein.

Das Schutzgehäuse 18 ist elastisch oder balgenartig ausgeführt, so dass ein Kippen der den Schwimmer 5 tragenden Gabel 11 möglich ist, wobei die Mechanik bis hin zum Schwimmer 5 weitestgehend geschützt ist. Die sonstigen Merkmale finden sich auch bereits in der Darstellung nebst Beschreibung des den Fig. 1 und 2 entnehmbaren ersten Ausführungsbeispiels, so dass sich weitere Ausführungen dazu erübrigen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Vorrichtung (1) zur Überwachung und Regelung von Flüssigkeitsfüllständen mit einem eine Signalübertragungseinrichtung enthaltenden Gehäuse (2), einem dem Gehäuse (2) zugeordneten Gehäuseflansch (3) zum Anflanschen an einen Durchgang (19), insbesondere an einen Durchgang in einer Behälterwand (20), einem sich durch den Gehäuseflansch (3) hindurch erstreckenden schwenkbaren Betätigungsorgan (21) mit einem endseitig angeordneten Schwimmer (5) und einem auf das Betätigungsorgan (21) wirkenden Auslöser (6),
**dadurch gekennzeichnet, dass** sich der Auslöser (6) mit einem Auslöseorgan (22) durch den Gehäuseflansch (3) hindurch zum Betätigungsorgan (21) erstreckt.

2. Vorrichtung nach Anspruch 1, **dadurch gekennzeichnet, dass** der Auslöser (6) eine vom Flüssigkeitsfüllstand unabhängige Schaltbewegung des Betätigungsorgans (21) bewirkt, wobei
der Auslöser (6) manuell oder
elektromechanisch, vorzugsweise kontaktlos über eine Fernbedienung, betätigbar sein kann.

3. Vorrichtung nach Anspruch 1 oder 2, **dadurch gekennzeichnet, dass** das Auslöseorgan (22) des Auslösers (6) eine Schaltbewegung des Betätigungsorgans (21), ggf. zusammen mit einer Schwenkbewegung des Schwimmers (5), bewirkt oder dass das Auslöseorgan (22) des Auslösers (6) eine von der Schwimmerbewegung entkoppelte Schaltbewegung des Betätigungsorgans (21) bewirkt.

4. Vorrichtung nach einem der Ansprüche 1 bis 3, **dadurch gekennzeichnet, dass** im Gehäuseflansch (3) eine Bohrung (16) ausgebildet ist und dass der Auslöser (6) von einer Seite her in der Bohrung (16) positioniert ist, wobei
sich die Bohrung (16) im Wesentlichen bis zur Mitte des Gehäuseflanschs (3) erstrecken kann oder
sich die Bohrung (16) durch den gesamten Gehäuseflansch (3) hindurch im Sinne eines Durchgangs (19) mit zwei offenen Enden erstrecken kann und wobei
wahlweise eines der offenen Enden mit einem Blindstopfen (7), einer Schraube oder dgl. geschlossen sein kann.

5. Vorrichtung nach Anspruch 4, **dadurch gekennzeichnet, dass** der Auslöser (6) wahlweise zur Oberwertmessung oder zur Unterwertmessung des Schwimmers (5) von der einen Seite oder von der anderen Seite in die im Gehäuseflansch (3) ausgebildete Bohrung (16) einsetzbar ist und/oder
dass der Auslöser (6) zumindest bereichsweise ein Außengewinde umfasst, welches mit einem Innengewinde der Bohrung (16) korrespondiert.

6. Vorrichtung nach Anspruch 4 oder 5, **dadurch gekennzeichnet, dass** die Bohrung (16) zumindest weitgehend orthogonal zur Schwenkachse (8) des Schwimmers (5) orientiert ist und/oder
dass der Gehäuseflansch (3) im Bereich (10) der Bohrung (16) verdickt ausgebildet ist.

7. Vorrichtung nach einem der Ansprüche 1 bis 6, **dadurch gekennzeichnet, dass** der Gehäuseflansch (3) quadratisch oder rechteckig mit abgerundeten Ecken ausgebildet ist, wobei
der Gehäuseflansch (3) im Bereich der Ecken Durchgänge für Befestigungsmittel aufweisen kann.

8. Vorrichtung nach einem der Ansprüche 1 bis 7, **dadurch gekennzeichnet, dass** dem Gehäuseflansch (3) sich durch den Durchgang (19) hindurch erstreckende Mittel zur schwenkbaren Aufnahme des Schwimmers (5) mittelbar oder unmittelbar zugeordnet sind, wobei
die Mittel vorzugsweise als zweiarmige Gabel (11) ausgebildet sind und wobei
die Arme der Gabel (11) eine Schwenkachse (8) für den Schwimmer (5) umfassen können.

9. Vorrichtung nach Anspruch 8, **dadurch gekennzeichnet, dass** ein die Mittel zur schwenkbaren Aufnahme des Schwimmers (5) zumindest teilweise umgebendes Schutzgehäuse (18) vorgesehen ist, wobei
das Schutzgehäuse (18) als sich mit den Mitteln zur schwenkbaren Aufnahme des Schwimmers (5) vom Gehäuseflansch (3) zum Schwimmer (5) durch den Durchgang (19) hindurch erstreckende Hülle ausgeführt sein kann oder wobei
das Schutzgehäuse (18) als sich mit den Mitteln zur schwenkbaren Aufnahme des Schwimmer von der Wandung des Durchgangs (19) bzw. von der Behältennrand (20) zum Schwimmer (5) erstreckende Hülle ausgeführt sein kann.

10. Vorrichtung nach Anspruch 9, **dadurch gekennzeichnet, dass** das Schutzgehäuse (18) am Gehäuseflansch (3) oder an der Wandung des Durchgangs (19) bzw. an der Behälterwand (20) festgelegt ist und/oder
dass das Schutzgehäuse (18) elastisch ausgeführt ist und/oder
dass das Schutzgehäuse (18) zumindest teilweise im Sinne eines Balgs ausgeführt ist und/oder
dass sich endseitig an das Schutzgehäuse (18) der Schwimmer (5) anschließt.

11. Vorrichtung nach einem der Ansprüche 1 bis 10, **dadurch gekennzeichnet, dass** das Gehäuse (2) auf der dem Gehäuseflansch (3) abgewandten Seite mit einem Deckel (13) abschließt, wobei
das Gehäuse (2) über den Bauteilen zugeordnete oder integrale Flansche (14, 15) mit dem Deckel (13) verbindbar, vorzugsweise verschraubbar, sein kann.

12. Vorrichtung nach einem der Ansprüche 1 bis 11, **dadurch gekennzeichnet, dass** das Gehäuse (2) und vorzugsweise der Gehäuseflansch (3) nebst Deckel (13) aus Rotguss RG 5 oder RG 10 besteht.

## Claims

1. Device (1) for monitoring and controlling fluid filling levels, having a housing (2) which contains a signal transmission device, a housing flange (3) which is associated with the housing (2) in order to be flange-mounted at a passage (19), in particular at a passage in a container wall (20), a pivotable actuation member (21) which extends through the housing flange (3) and which has a float (5), which is arranged at an end face, and an actuator (6) which acts on the actuation member (21),
**characterised in that** the actuator (6) extends with an actuation member (22) through the housing flange (3) to the actuation member (21).

2. Device according to claim 1, **characterised in that** the actuator (6) brings about a switching movement of the actuation member (21) that is independent of the fluid filling level,
the actuator (6) being able to be actuatable manually or electromechanically, preferably in a contactless manner via a remote control unit.

3. Device according to claim 1 or 2, **characterised in that** the actuation member (22) of the actuator (6) brings about a switching movement of the actuation member (21), optionally together with a pivot movement of the float (5), or
**in that** the actuation member (22) of the actuator (6) brings about a switching movement of the actuation member (21) that is decoupled from the float movement.

4. Device according to any one of claims 1 to 3,
**characterised in that** a hole (16) is formed in the housing flange (3) and **in that** the actuator (6) is positioned in the hole (16) from one side,
the hole (16) being able to extend substantially as far as the centre of the housing flange (3) or
the hole (16) being able to extend through the entire housing flange (3) in the manner of a passage (19) having two open ends and
optionally one of the open ends being able to be closed with a blanking plug (7), a screw, or the like.

5. Device according to claim 4, **characterised in that** the actuator (6) can optionally be introduced into the hole (16) formed in the housing flange (3) in order to measure the upper limit or the lower limit of the float (5) from one side or from the other side, and/or
**in that** the actuator (6) comprises, at least in regions, an outer thread which corresponds to an inner thread of the hole (16).

6. Device according to claim 4 or 5, **characterised in that** the hole (16) is orientated at least substantially orthogonally relative to the pivot axis (8) of the float (5) and/or
**in that** the housing flange (3) is constructed so as to be thickened in the region (10) of the hole (16).

7. Device according to any one of claims 1 to 6,
**characterised in that** the housing flange (3) is constructed so as to be square or rectangular with rounded corners,
the housing flange (3) being able to have passages for securing means in the region of the corners.

8. Device according to any one of claims 1 to 7,
**characterised in that** means which extend through the passage (19) for pivotably receiving the float (5) are associated, directly or indirectly, with the housing flange (3),
the means preferably being constructed as a two-arm fork (11) and
the arms of the fork (11) being able to comprise a pivot axis (8) for the float (5).

9. Device according to claim 8, **characterised in that** there is provided a protective housing (18) which at least partially surrounds the means for pivotably receiving the float (5),
the protective housing (18) being able to be constructed as a casing which extends through the passage (19) with the means for pivotably receiving the float (5) from the housing flange (3) to the float (5) or
the protective housing (18) being able to be constructed as a casing which extends with the means for pivotably receiving the float from the wall of the passage (19) or from the container wall (20) to the float (5).

10. Device according to claim 9, **characterised in that** the protective housing (18) is secured to the housing flange (3) or the wall of the passage (19) or the container wall (20) and/or
**in that** the protective housing (18) is constructed in a resilient manner and/or
**in that** the protective housing (18) is constructed at least partially in the manner of a bellows and/or
**in that** the float (5) adjoins the protective housing (18) at an end face.

11. Device according to any one of claims 1 to 10,
**characterised in that** the housing (2) terminates in a lid (13) at the side facing away from the housing flange (3),
it being possible for the housing (2) to be able to be connected, preferably screwed, to the lid (13) by means of flanges (14, 15) which are integral or associated with the components.

12. Device according to any one of claims 1 to 11,
**characterised in that** the housing (2) and preferably the housing flange (3) with the cover (13) is/are composed of gunmetal RG 5 or RG 10.

## Revendications

1. Dispositif (1) pour la surveillance et la régulation de niveaux de liquide, avec un carter (2) contenant un dispositif de transmission de signaux, un flasque de carter (3) adjoint au carter (1) pour le bridage à un passage (19), en particulier à un passage dans une paroi de récipient (20), un organe d'actionnement (21) pivotant s'étendant à travers le flasque de carter (3) avec un flotteur (5) disposé du côté d'extrémité et un interrupteur (6) agissant sur l'organe d'actionnement (21),
**caractérisé par le fait que** l'interrupteur (6) s'étend par un organe de déclenchement (22) à travers le flasque de carter (3) en l'organe d'actionnement (21).

2. Dispositif selon la revendication 1,
**caractérisé par le fait que** l'interrupteur (6) produit un déplacement de commutation de l'organe d'actionnement (21) indépendant du niveau de liquide,
l'interrupteur (6) pouvant être actionné manuellement ou
électromécaniquement, de préférence sans contact par l'intermédiaire d'une télécommande.

3. Dispositif selon la revendication 1 ou 2,
**caractérisé par le fait que** l'organe de déclenchement (22) de l'interrupteur (6) produit un déplacement de commutation de l'organe d'actionnement (21), le cas échéant en même temps qu'un déplacement de pivotement du flotteur (5) ou
que l'organe de déclenchement (22) de l'interrupteur (6) produit un déplacement de commutation de l'organe d'actionnement (21) désaccouplé du déplacement du flotteur.

4. Dispositif selon l'une des revendications 1 à 3,
**caractérisé par le fait qu'**un alésage (16) est formé dans le flasque de carter (3) et que l'interrupteur (6) est positionné depuis un côté dans l'alésage (16),
l'alésage (16) pouvant s'étendre essentiellement jusqu'au milieu du flasque de carter (3) ou
l'alésage (16) pouvant s'étendre à travers la totalité du flasque de carter (3) dans le sens d'un passage (19) avec deux extrémités ouvertes et
l'une des extrémités ouvertes pouvant être fermée au choix par un bouchon dissimulé (7), une vis ou similaire.

5. Dispositif selon la revendication 4,
**caractérisé par le fait que** l'interrupteur (6) peut être placé au choix pour la mesure de la valeur supérieure ou pour la mesure de la valeur inférieure du plongeur (5) depuis l'un des côtés ou depuis l'autre côté dans l'alésage (16) formé dans le flasque de carter (3) et/ou
que l'interrupteur (6) comprend au moins par zones un filetage qui correspond avec un taraudage de l'alésage (16).

6. Dispositif selon la revendication 4 ou 5,
**caractérisé par le fait que** l'alésage (16) est orienté au moins largement orthogonalement à l'axe de pivotement (8) du flotteur (5) et/ou
que le flasque de carter (3) est réalisé épaissi dans la zone (10) de l'alésage (16).

7. Dispositif selon l'une des revendications 1 à 6,
**caractérisé par le fait que** le flasque de carter (3) est réalisé carré ou rectangulaire avec des coins arrondis,
le flasque de carter (3) pouvant présenter dans la zone des coins des passages pour des moyens de fixation.

8. Dispositif selon l'une des revendications 1 à 7,
**caractérisé par le fait que** des moyens pour la réception à pivotement du flotteur (5), s'étendant à travers le passage (19), sont adjoints indirectement ou directement au flasque de boîtier (3),
les moyens étant réalisés de préférence sous forme d'une fourchette (11) à deux bras et
les bras de la fourchette (11) pouvant comprendre un axe de pivotement (8) pour le flotteur (5).

9. Dispositif selon la revendication 8,
**caractérisé par le fait qu'**est prévu un carter de protection (18) entourant au moins partiellement les moyens pour la réception à pivotement du flotteur (5),
le carter de protection (18) pouvant être réalisé sous la forme d'une gaine s'étendant avec les moyens pour la réception à pivotement du flotteur du flasque de carter (3) jusqu'au flotteur (5) à travers le passage (19) ou
le carter de protection (18) pouvant être réalisé sous la forme d'une gaine s'étendant avec les moyens pour la réception à pivotement du flotteur de la paroi du passage (19) ou respectivement de la paroi du récipient (20) jusqu'au flotteur (5).

10. Dispositif selon la revendication 9,
**caractérisé par le fait que** le carter de protection (18) est fixé au flasque de carter (3) ou à la paroi du passage (19) ou respectivement à la paroi du récipient (20) et/ou
que le carter de protection (18) est réalisé élastique et/ou
que le carter de protection (18) est réalisé au moins partiellement dans le sens d'un soufflet et/ou
que le flotteur (5) se raccorde du côté d'extrémité au carter de protection (18).

11. Dispositif selon l'une des revendications 1 à 10,
**caractérisé par le fait que** le carter (2) se ferme du côté écarté du flasque de carter (3) par un couvercle (13),
le carter (2) pouvant être fixé, de préférence vissé, au couvercle (13) par l'intermédiaire du flasque adjoint aux composants ou d'une seule pièce.

12. Dispositif selon l'une des revendications 1 à 11,
**caractérisé par le fait que** le carter (2) et de préférence le flasque de carter (3) avec le couvercle (13) sont constitués de bronze au zinc RG 5 ou RG 10.
